# EUROPEAN PATENT APPLICATION

(11) **EP 4 535 170 A1**
(43) Date of publication of application: **09.04.2025**
(21) Application number: 24196091.3
(22) Date of filing: 23.08.2024
(51) Int. Cl.: G06F 9/50, G06F 9/455

(54) **MANAGING CLUSTERS OF HOSTS TO SUPPORT DIFFERENT TYPES OF VIRTUAL ENDPOINT WORKLOADS**

(30) Priority: 28.09.2023 US 202318476834
(71) Applicant: VMware LLC, Palo Alto, CA 94304 (US)
(72) Inventor: Narasimhamurthy, Niharika, Palo Alto, 94304 (US); Sinha, Sandeep, Palo Alto, 94304 (US); Rizvi, Ammar, Palo Alto, 94304 (US); Kodenkiri, Akash, Palo Alto, 94304 (US); Mishra, Shweta, Palo Alto, 94304 (US)
(74) Representative: Dilg, Haeusler, Schindelmann Patentanwaltsgesellschaft mbH

(57) **Abstract**

Described herein are systems, methods, and software to manage the assignment of hosts to host clusters and the assignment of virtual endpoints to the host clusters. In one implementation, a management service identifies a host to be added to a computing environment and identifies physical resources available on the host. The management service further determines a host cluster for the host from a plurality of host clusters in the computing environment based on the physical resources available on the host and assign the host to the host cluster.

## Description

### BACKGROUND

In computing environments, host computers (hosts) can execute virtual endpoints, such as virtual machines, containers, and the like, to use the resources of the hosts more efficiently. Each host can abstract the physical components of the computer and provide the abstracted components to the virtual endpoints. The physical components can comprise processor resources, memory resources, networking resources, storage resources, graphical processing resources, or some other resources.

When a virtual endpoint is deployed in an environment, such as a virtual machine, a host can be selected for the virtual machine and resources can be allocated of the host to the virtual machine. The host and associated hypervisor can provide a virtual processor, memory, storage, and the like that support the operations of the virtual machine. The virtual machine can be used to provide front-end services, data processing services, database management services, virtual desktops, or some other type of service.

In some environments, a variety of different hosts can be employed that can provide different physical configurations. The configurations can comprise different processing configurations, memory configurations, storage configurations, and the like. However, as the number of hosts increase in an environment, difficulties can arise in assigning the virtual endpoints to the hosts that provide the desired physical configuration.

### OVERVIEW

The technology disclosed herein manages clusters of hosts to support different types of virtual endpoint workloads. In one implementation, a method includes identifying a host to be added to a computing environment and identifying physical resources available on the host. The method further comprises determining a host cluster for the host from a plurality of host clusters in the computing environment based on the physical resources available on the host, wherein the plurality of host clusters each comprise one or more hosts that promote one or more physical resources over one or more other physical resources. Once a host cluster is determined, the method further includes assigning the host to the host cluster.

In one implementation, after the host is assigned to the host cluster, the method further includes identifying one or more virtual machines to migrate to the host from one or more other hosts in the host cluster. Once identified, the method initiates a migration of the one or more virtual machines to the host.

### BRIEF DESCRIPTION OF THE DRAWINGS

Figure 1 illustrates a computing environment to manage virtual endpoint allocations to host clusters according to an implementation.
Figure 2 illustrates an operation of a management service to manage virtual endpoint allocations to host clusters according to an implementation.
Figure 3 illustrates a computing environment to manage the allocation of a host to a host cluster according to an implementation.
Figure 4 illustrates an operation of a management service to manage the allocation of a host to a host cluster according to an implementation.
Figure 5 illustrates a computing environment to manage the allocation of a new hosts to a cluster according to an implementation.
Figure 6 illustrates an operation of a management service to allocate a host to a new cluster according to an implementation.
Figure 7 illustrates a management computing system to manage virtual endpoint allocations and host allocations in a computing environment.

### DETAILED DESCRIPTION

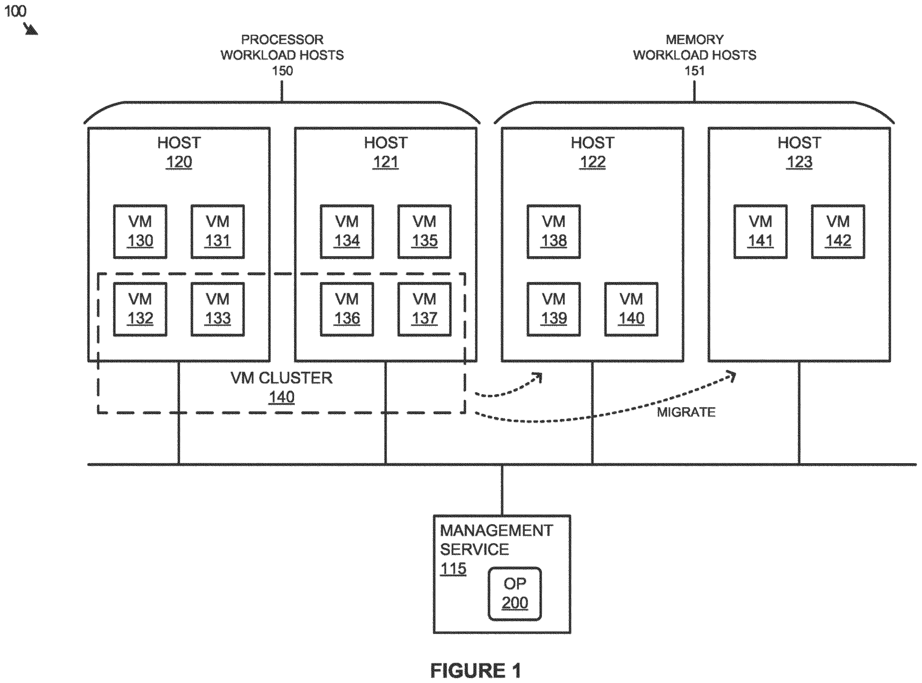

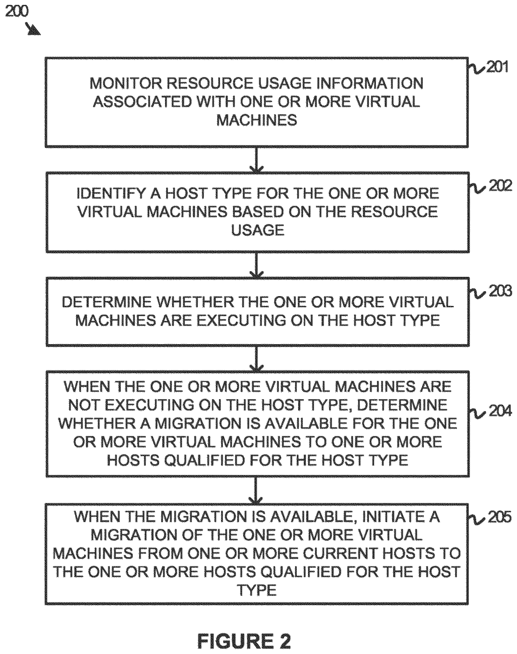

Figure 1 illustrates a computing environment 100 to manage virtual endpoint allocations to host clusters according to an implementation. Computing environment 100 includes hosts 120-123 and management service 115. Hosts 120-121 represent a cluster of processor workload hosts 150 and hosts 122-123 represent a cluster of memory workload hosts 151. Hosts 120-123 comprise virtual machines 130-142, wherein virtual machines 132-133 and 136-137 are representatives of virtual machine cluster 140. Management service 115 provides operation 200 that is described further in Figure 2. Although demonstrated with four hosts in the example of computing environment 100, a computing environment can employ any quantity of hosts to provide the desired operations.

In computing environment 100, hosts 120-123 are used to provide a platform for the operations of virtual machines 130-142. Virtual machines 130-142 can provide front-end operations, database management operations, remote desktop operations, or some other operations. Hosts 120-123 can abstract the physical resources of the host and provide the abstracted resources to the individual virtual machines. The abstracted resources can comprise processing resources, memory resources, networking resources, storage resources, or some other resource. For example, virtual machine 130 can be provided a virtual processor, a virtual network interface, a virtual disk, or some other abstracted physical component to support the execution of the virtual machine by host 120 and a hypervisor operating on host 120.

Here, to manage the virtual machine deployment and the hosts in computing environment 100, management service 115 is provided. Management service 115 can comprise one or more computers capable of monitoring hosts 120-123 and virtual machines 130-142 and assigning virtual machines to individual hosts and clusters. When a host is added to computing environment 100, the host is assigned to a cluster by management service 115 based on the physical resources available on the host. In at least one implementation, the each of the clusters in a computing environment can each be associated with a primary use case or workload focus, wherein first resources on hosts of the cluster are promoted over second resources on the hosts of the cluster. Here, hosts 120-121 can include physical processing resources that qualify hosts 120-121 for a cluster of processor workload hosts 150. In contrast, hosts 122-123 can include memory availability that qualifies hosts 122-123 for a cluster of memory workload hosts 151. When a host is to be added, management service 115 can identify the physical resources of the host and determine which of the clusters correspond to the physical resources of the host (i.e., a host type or workload focus based on resource availability of the host). For example, when host 123 is added to computing environment 100, management service 115 can identify resources on the host and determine that the resources qualify for memory workload hosts 151. The selection can be based on one or more criteria that correspond to each of the clusters, such as a minimum amount of processing resources, memory resources, storage resources, and the like. If a host qualifies for multiple clusters, management service 115 can determine a best-fit cluster based on the resources that are most prevalent on the host (e.g., a score for better processing than a score for memory for the host), can determine a best-fit cluster based on a cluster needs for an additional host, or can determine a best-fit cluster based on some other factor.

In addition to assigning hosts to clusters, management service 115 can also manage the assignment and migration of virtual machines within computing environment 100. For example, when a new virtual machine is added to the computing environment, management service 115 can determine a cluster for the virtual machine based on resource requirements or an estimated resource usage for the virtual machine. The estimated resource usage can be provided by an administrator, can be determined based on previous deployments of the virtual machine, or based on some other factor. As an example, when virtual machine 142 is deployed, management service 115 can determine that virtual machine 142 corresponds to a memory intensive operation. Accordingly, management service 115 may assign virtual machine 141 to a host in memory workload hosts 151. Management service 115 can select the host in the cluster based on the available resources of the host, the resource requirements of the virtual machine, the quality of service required by the virtual machine, or some other factor.

After a virtual machine is deployed, management service 115 can further determine whether migration of the virtual machines is required. In the example of computing environment 100, virtual machines 132-133 and 136-137 are currently deployed in processor workload hosts 150. However, management service 115 can monitor the resource usage of the virtual machines and determine whether the workload associated with the virtual machines should be migrated to memory workload hosts 151. For example, when first deployed, virtual machines 132-133 and 136-137 may indicate that processing resources are most important for the workload, wherein the indication could come from an administrator, previous deployments of the virtual machines, or some other factor. After deploying the virtual machines, management service 115 can monitor the resource usage of the virtual machines and determine when the resource usage satisfies criteria to move from a first cluster to a second cluster. The criteria can comprise a threshold amount of memory usage, a threshold amount of processor usage (e.g., percentage), or some other factor. Once the criteria are satisfied, management service 115 can initiate a migration of virtual machines 132-133 and 136-137 from processor workload hosts 150 to memory workload hosts 151.

Figure 2 illustrates an operation 200 of a management service to manage virtual endpoint allocations to host clusters according to an implementation. The steps of operation 200 are referenced parenthetically in the paragraphs that follow with reference to systems and elements of computing environment 100 of Figure 1.

In operation 200, management service 115 monitors (201) resource usage information associated with one or more virtual machines. The resource usage information can comprise processing resource usage (e.g., percentage of available resources), memory resource usage (e.g., percentage of available memory used), storage usage, or some other resource usage metric in association with the virtual machines in the computing environment. In some implementations, virtual machines are deployed in computing environment 100 to different clusters of hosts, wherein a first cluster, processor workload hosts 150, comprises physical hardware to support virtual machines with more processing intensive workloads, and wherein a second cluster, memory workload hosts 151, comprises physical memory hardware to support virtual machines with more memory intensive workloads. When a request is generated to deploy a new virtual machine, the virtual machine can be allocated to a first cluster based on one or more factors. The factors can include management service 115 obtaining administrator input indicative workload information for the virtual machine (i.e., memory intensive application, processor intensive application, etc.), management service 115 can identify workload information from previous deployments of the virtual machine or deployments of a similar virtual machine, or management service 115 can allocate the virtual machine in some other manner. After the deployment of the virtual machine, management service 115 will monitor resource usage associated with the virtual machine.

While monitoring the resource usage of the virtual machine, operation 200 further identifies (202) a host type (i.e., workload focus) for the one or more virtual machines based on the resource usage. The host type can correspond to different available clusters within the computing environment. As demonstrated in computing environment 100, two clusters are included to represent two different host types, processor workload hosts 150 and memory workload hosts 151. Based on the resource usage information, management service 115 can determine whether a virtual machine prefers a host in processor workload hosts 150 or memory workload hosts 151. For example, virtual machine 137 can indicate a large memory resource usage while using limited processing resource usage. Accordingly, management service 115 can determine that virtual machine 137 would prefer memory workload hosts 151.

After determining a host type for the one or more virtual machines, operation 200 determines (203) whether the one or more virtual machines are executing on the identified host type. When the one or more virtual machines are operating on the identified host type, then management service 115 will not migrate the one or more virtual machines to an alternative host type cluster. Alternatively, when the one or more virtual machines are not executing on the identified host type, operation 200 will determine (204) whether a migration is available for the one or more virtual machines to one or more hosts qualified for the host type.

When a migration is not possible (i.e., resources are unavailable for the one or more virtual machines on the desired cluster), management service 115 may take no migration action, can generate a notification for the administrator indicating the lack of resources, can place the one or more virtual machines into a queue to be migrated, or can perform some other action. If the migration is possible (i.e., resources are available), operation 200 will initiate (205) a migration of the one or more virtual machines from one or more current hosts to the one or more hosts qualified for the host type.

Referring to the example in computing environment 100, management service 115 can monitor the resource usage associated with virtual machine cluster 140 and determine that the virtual machines are more associated with a memory resource limitation than processor resource limitation. For example, virtual machine cluster 140 can use a larger percentage of the memory resource allocation than the processor resource allocation. Once identified, management service 115 can select one or more hosts in the cluster for memory workload hosts 151 to support the virtual machines and can migrate virtual machine cluster 140 to the one or more hosts in memory workload hosts 151. The hosts can be selected based on the available resources on the hosts, the requirements of the virtual machines, or some other factor. When migrating the virtual machines, management service 115 can allocate more resources (e.g., additional memory for virtual machine cluster 140), can allocate faster memory to virtual machine cluster 140, or can provide some other different resource allocation to virtual machine cluster 140 in association with the memory resource enhancements provided by memory workload hosts 151.

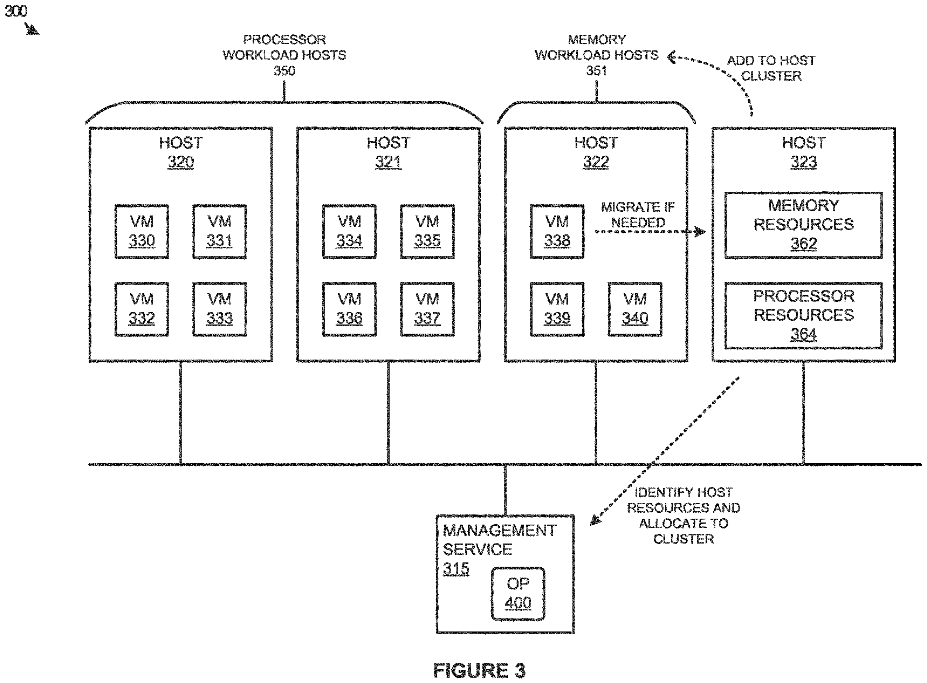

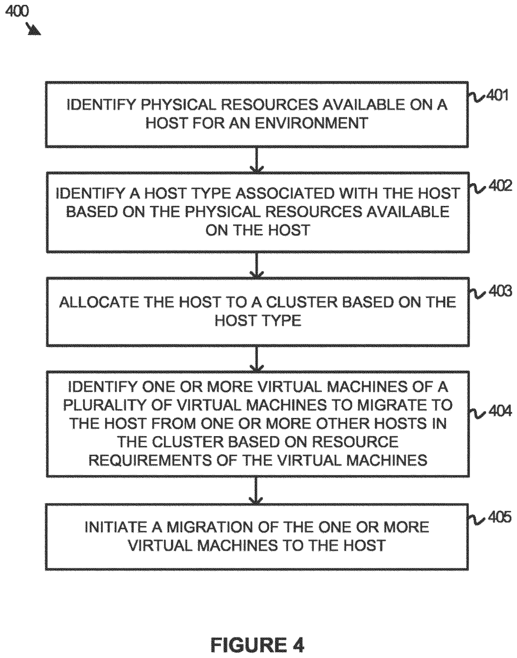

Figure 3 illustrates a computing environment 300 to manage the allocation of a host to a host cluster according to an implementation. Computing environment 300 includes management service 315, hosts 320-321 that belong to processor workload hosts 350, host 322 that belongs to memory workload hosts 351, and host 323 representative of a new host added to computing environment 300. Hosts 320-323 include virtual machines 330-340, and host 323 includes memory resources 362 and processor resources 364. Management service 315 provides operation 400 that is further described below with respect to Figure 4.

In computing environment 300, host 323 is added to an existing environment that provides a platform for virtual machines 330-340. Hosts 320-322 represent two separate clusters of hosts that represent different host types or workload focus. Specifically, hosts 320-321 are in processor workload hosts 350 and host 322 is in memory workload hosts 351. The hosts can be separated based on the physical resources available on each of the hosts, wherein hosts can satisfy criteria to belong to different clusters.

When host 323 is added, management service 315 will identify physical resource information associated with host 323 including memory resources 362 and processor resources 364. The physical resource information can comprise processor type, processor clock speed, number of cores, quantity of memory, speed of memory, storage type and size information, or some other information associated with the physical resources available on host 323. The resource information can then be compared to criteria associated with each of the clusters to determine a cluster for the host. In some implementations, the different resources can be compared to determine whether processor, memory, storage, and the like are prioritized on the host. For example, a host with a slower processor clock speed but a large quantity of memory can be placed in memory workload hosts 351 to support virtual machine workloads with more memory requirements. In another implementation, each cluster can require one or more criteria for a host to qualify. If a host qualifies for multiple clusters, management service 315 can select a cluster based on a best fit determination, which can include surplus resources, additional hosts required for a particular cluster, or some other best fit determination.

Here, based on the resource information for host 323, which can be communicated to management service 315 by host 323, management service 315 selects the cluster for memory workload hosts 351 for host 323. Once selected, virtual machines can be assigned or migrated if required to host 323.

Figure 4 illustrates an operation 400 of a management service to manage the allocation of a host to a host cluster according to an implementation. The steps of operation 400 are referenced parenthetically in the paragraphs that follow with reference to systems and elements of computing environment 300 of Figure 3.

Operation 400 includes identifying (401) physical resources available on a host for a computing environment. The physical resources can comprise processor resources (clock, cores, type, and the like), memory resources (quantity, speed, latency, and the like), storage (type, quantity, and the like), or some other physical resource information. From the information, operation 400 further identifies (402) a host type associated with the host based on the physical resources available on the host and allocates (403) the host to a cluster based on the host type.

As demonstrated in computing environment 300, clusters of hosts are created based on resource priorities for the host, wherein the types can be defined based on one or more resources that are prioritized or promoted on the host. For example, hosts that comprise physical processing resources that are promoted or provide a higher quality of service than the memory resource (e.g., better processor type than memory resource quantity) can qualify for processor workload hosts 350. Alternatively, and as demonstrated in computing environment 300, when host 323 has a resource priority associated with memory resources, host 323 can be added to memory workload hosts 351, wherein adding the host can permit one or more virtual machines to be assigned to the host.

After host 323 is added, operation 400 further identifies (404) one or more virtual machines of a plurality of virtual machines to migrate to the host from one or more other hosts in the cluster based on the resource requirements of the plurality of virtual machines. In some implementations, management service 315 can first determine whether any migration is required. A migration can be required when resources are unavailable to satisfy minimum criteria for the virtual machine or preferred criteria for the virtual machine. For example, a first host may be unable to provide the preferred quantity of memory to a virtual machine and may require the virtual machine to be migrated to a second host.

Although demonstrated as migrating virtual machines from the same cluster, host 323 can also support virtual machines from processor workload hosts 350. Virtual machines migrated from processor workload hosts 350 can be selected based on memory requirements for the virtual machines, wherein hosts in memory workload hosts 351 can better provide the memory resources required for the virtual machines.

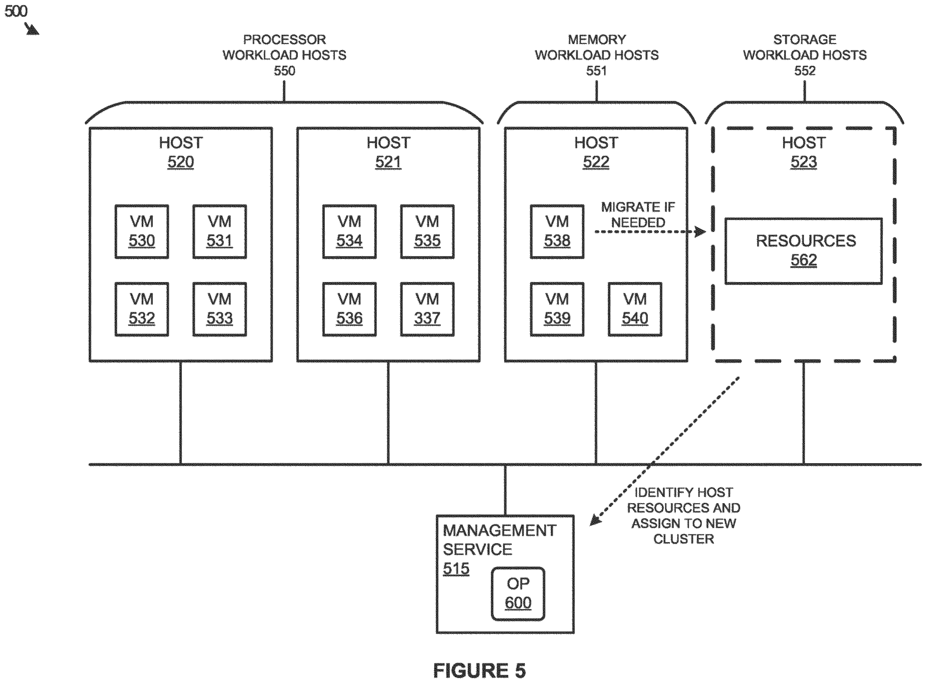

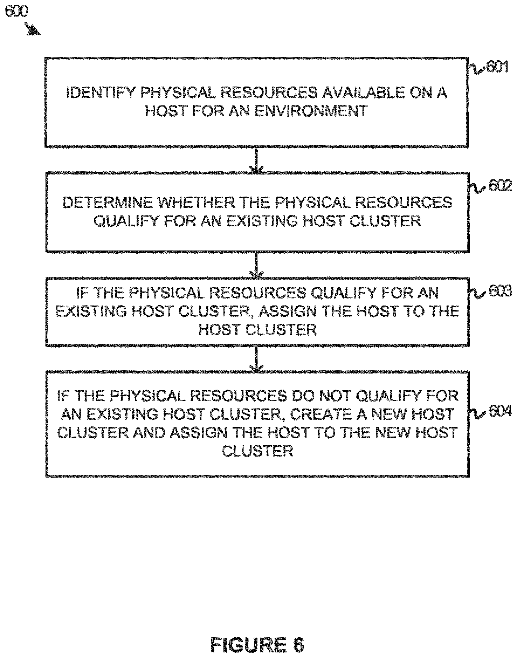

Figure 5 illustrates a computing environment 500 to manage the allocation of a new hosts to a cluster according to an implementation. Computing environment 500 includes management service 515, hosts 520-521 that belong to processor workload hosts 550, host 522 that belongs to memory workload hosts 551, and host 523 representative of a new host added to computing environment 500 (allocated to new cluster for storage workload hosts 552). Hosts 520-523 include virtual machines 530-540, and host 523 includes resources 562 (processor, memory, storage, and the like). Management service 515 provides operation 600 that is further described below with respect to Figure 6.

In computing environment 500, host 523 is added to an existing environment that provides a platform for virtual machines 530-540. Hosts 530-532 represent two separate clusters of hosts that represent different host types or workload focus. Specifically, hosts 520-521 are in processor workload hosts 550 and host 522 is in memory workload hosts 551. The hosts are separated or allocated to the different clusters based on physical resources available on each of the hosts, wherein different clusters can require different criteria for membership. The criteria can comprise a minimum set of resources, a prioritization of one or more resources over other resources (e.g., more processing resources than memory resources), or can comprise some other criteria.

When host 523 is added to computing environment 500, management service 515 will identify resources 562, which can be provided by host 523, and determine a cluster for the new host. In some implementations, resources 562 are compared to the minimum or required resources for the clusters represented by processor workload hosts 550 and memory workload hosts 551. Here, host 523 does not provide the required resources for the existing clusters. Accordingly, management service 515 can identify and create a new cluster based on resources 562, wherein management service 515 can determine criteria for the new cluster based on resources 562. Specifically, because host 523 comprises a large quantity of storage resources, a new cluster is created for storage workload hosts 552. Although this is one example of a new resource cluster, clusters can promote any type of resource or resources combination. In some examples, the criteria for a new cluster can be defined by an administrator of the computing environment.

Figure 6 illustrates an operation 600 of a management service to allocate a host to a new cluster according to an implementation. The steps of operation 600 are referenced parenthetically in the paragraphs that follow with reference to systems and elements of computing environment 500.

Operation 600 provides for identifying (601) physical resources available on a new host for an environment and determines (602) whether the physical resources qualify for an existing host cluster. In determining whether the physical resources qualify for an existing cluster, management service 515 can compare the resources to criteria for each of the clusters. For example, to qualify for the cluster of processor workload hosts 550, a host may be required to have a minimum amount of processing resources. Similarly, to qualify for the cluster of memory workload hosts 551, a host may be required to have a minimum quantity of memory. If the physical resources for the host qualify for an existing cluster, operation 600 will assign (603) the host to the existing host cluster. For example, if a host had the processing resources to qualify for processor workload hosts 550, then management service 515 can assign the host to the existing cluster for processor workload hosts 550.

In contrast, if the physical resources to not qualify for an existing cluster, operation 600 will create (604) a new host cluster and assign the host to the new host cluster. Referring to the example in computing environment 500, when host 523 is added to the environment, management service 515 can determine that host 523 does not provide the resources required from the existing two clusters. Management service 515 can then use the resources 562, to determine a new cluster for the host type of host 523. Specifically, management service 515 can determine that host 523 includes a large quantity of storage and can create a new cluster (with corresponding new qualification criteria) for storage workload hosts 552. Thus, if additional hosts are added to the environment that satisfy the criteria for storage workload hosts 552, then the additional hosts can be added to the cluster.

In some implementations, after host 523 is added to a cluster, management service 515 can monitor the resource usage of virtual machines 530-540 and can further identify the resource requirements of virtual machines 530-540. If a virtual machine requires additional storage resources that can be provided via host 523, then the virtual machine can be migrated to host 523. For example, virtual machine 538 may require additional storage resources that can be satisfied by host 523, while the other resources (e.g., processor and memory) can also be supported by host 523. Accordingly, management service 515 can initiate a migration of virtual machine 538 to provide a better quality of service to virtual machine 538.

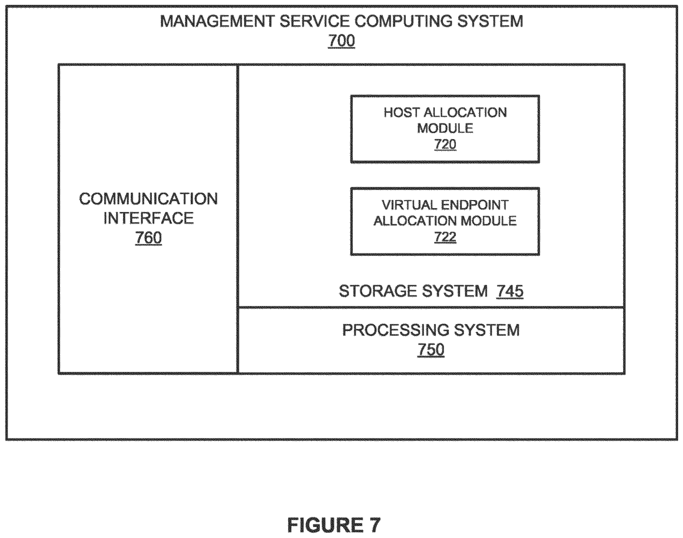

Figure 7 illustrates a management computing system 700 to manage virtual endpoint allocations and host allocations in a computing environment. Management computing system 700 is representative of any computing system or systems with which the various operational architectures, processes, scenarios, and sequences disclosed herein for a management service can be implemented. Management computing system 700 is an example of management service 115 of Figure 1, management service 315 of Figure 3, and management service 515 of Figure 5, although other examples may exist. Management computing system 700 includes storage system 745, processing system 750, and communication interface 760. Processing system 750 is operatively linked to communication interface 760 and storage system 745. Communication interface 760 may be communicatively linked to storage system 745 in some implementations. Management computing system 700 may further include other components such as a battery and enclosure that are not shown for clarity.

Communication interface 760 comprises components that communicate over communication links, such as network cards, ports, radio frequency (RF), processing circuitry and software, or some other communication devices. Communication interface 760 may be configured to communicate over metallic, wireless, or optical links. Communication interface 760 may be configured to use Time Division Multiplex (TDM), Internet Protocol (IP), Ethernet, optical networking, wireless protocols, communication signaling, or some other communication format - including combinations thereof. Communication interface 760 may be configured to communicate with hosts of a computing environment, administrative or console devices, or some other computing device.

Processing system 750 comprises microprocessor (i.e., at least one processor) and other circuitry that retrieves and executes operating software from storage system 745. Storage system 745 may include volatile and nonvolatile, removable, and non-removable media implemented in any method or technology for storage of information, such as computer readable instructions, data structures, program modules, or other data. Storage system 745 may be implemented as a single storage device but may also be implemented across multiple storage devices or sub-systems. Storage system 745 may comprise additional elements, such as a controller to read operating software from the storage systems. Examples of storage media include random access memory, read only memory, magnetic disks, optical disks, and flash memory, as well as any combination or variation thereof, or any other type of storage media. In some implementations, the storage media may be a non-transitory storage media. In some instances, at least a portion of the storage media may be transitory. In no case is the storage media a propagated signal.

Processing system 750 is typically mounted on a circuit board that may also hold the storage system. The operating software of storage system 745 comprises computer programs, firmware, or some other form of machine-readable program instructions. The operating software of storage system 745 includes host allocation module 720 and virtual endpoint allocation module 722. The operating software on storage system 745 may further include an operating system, utilities, drivers, network interfaces, applications, or some other type of software. When read and executed by processing system 750 the operating software on storage system 745 directs management computing system 700 to operate as a management service described herein in Figures 1-6.

In at least one implementation, host allocation module 720 directs processing system 750 to identify a host to be added to a computing environment and identify physical resources available on the host. The physical resource information of the host can be provided by the host itself, the administrator of the environment, or by some other means. The physical resource information can include processor type, a quantity of cores, a clock speed of the processor, the quantity of memory, the speed of the memory, storage capacity, or some other information about the host. Host allocation module 720 will further direct processing system 750 to determine whether the host qualifies for an existing cluster in the computing environment based on the physical resources available on the host, wherein each cluster in the computing environment comprises one or more hosts that promote one or more physical resources over one or more other physical resources. For example, a first cluster can represent hosts that prioritize processor resources over other resources, while a second cluster can represent hosts that prioritize memory resources over other resources. Each cluster can require one or more criteria for a host to be added, wherein the one or more criteria can comprise a comparison of the resources to determine which of the resources is promoted on the host (e.g., better processor than memory configuration), can comprise minimum physical requirements, or can comprise some other criteria. If a host can qualify for multiple existing clusters, then host allocation module 720 can select the best-fit cluster based on the cluster that requires an additional host, based on a comparison of the resources on the host, or based on some other factor. If a host qualifies for a single cluster, then the host can be assigned to the identified single cluster.

In the example, where the host does not comprise physical resources that qualify for an existing cluster, host allocation module 720 can create a new cluster for the host, wherein the new cluster can be defined by the promoted or prioritized resources on the host. For example, a computing environment may comprise a first cluster that includes hosts that prioritize processor resources and a second cluster that includes hosts that prioritize memory resources. When a host is added that fails to promote resources or qualify for the criteria of the two existing clusters, a new cluster can be created by host allocation module 720 that applies to the host type or resources associated with the new host. Thus, if a host was added that prioritized storage resources, a new cluster can be created that comprises hosts that promote storage resources. Host allocation module 720 can also identify resource requirements or criteria for hosts to be added to the cluster, wherein the requirements can be defined by an administrator, defined by the first host that creates the cluster, or defined in some other manner. For example, when a new cluster is required for the storage resources, host allocation module 720 can identify criteria from a data structure to determine whether any new hosts should be added to the cluster.

Once a host has been added to an existing cluster or used to generate a new cluster, virtual endpoint allocation module 722 can be used to assign and migrate virtual machines in the environment. In one implementation, endpoint allocation module 722 can direct processing system 750 to identify a new virtual machine to be added to the environment and identify resource requirements associated with the virtual machine. The resource requirements can comprise processing requirements (cores, type, and the like), memory requirements (speed, size, and the like), or some other requirements for the virtual machine. Based on the resource requirements, endpoint allocation module 722 will direct processing system 750 to identify a cluster from the available clusters for the virtual machine. For example, if the largest requirement for the virtual machine were for processing resources, then endpoint allocation module 722 can select a processor prioritized cluster and a host from the cluster for the virtual machine.

In some implementations, endpoint allocation module 722 can direct processing system 750 to monitor the resource usage associated with virtual machines deployed in the environment and determine when the virtual machine requires a migration to an alternative host cluster. For example, when a virtual machine is first deployed in an environment, the virtual machine can be deployed to a first cluster that comprises hosts that prioritize processing resources over other resources. During the deployment of the virtual machine, endpoint allocation module 722 can monitor the resource usage of the virtual machine and the requested resources associated with the virtual machine. Thus, if the virtual machine were using or requesting memory resources that could not be supported by the first cluster, endpoint allocation module 722 can identify a second cluster that promotes memory the requested memory resources (and the other resources required by the virtual machine). Once identified, the virtual machine can be migrated to the second cluster from the first cluster.

Although demonstrated using virtual machines in the examples of Figures 1-7 using virtual machines, similar operations can be performed using other virtualized endpoints. For example, similar operations can be performed to manage the assignment and deployment of containers in a computing environment.

The included descriptions and figures depict specific implementations to teach those skilled in the art how to make and use the best mode. For teaching inventive principles, some conventional aspects have been simplified or omitted. Those skilled in the art will appreciate variations from these implementations that fall within the scope of the invention. Those skilled in the art will also appreciate that the features described above can be combined in various ways to form multiple implementations. As a result, the invention is not limited to the specific implementations described above, but only by the claims and their equivalents.

## Claims

1. A method comprising:
identifying a host to be added to a computing environment;
identifying physical resources available on the host;
determining a host cluster for the host from a plurality of host clusters in the computing environment based on the physical resources available on the host, wherein each host cluster of the plurality of host clusters promotes one or more physical resources over one or more other physical resources;
assigning the host to the host cluster.

2. The method of claim 1, wherein
the physical resources comprise memory resources and processing resources.

3. The method of claim 1 or 2, further comprising:
identifying host resource availability for one or more virtual machines on one or more other hosts in the host cluster;
identifying a subset of virtual machines from the one or more virtual machines with the host resource availability that satisfy one or more criteria; and
migrating the subset of virtual machines to the host.

4. The method of claim 3, wherein
the host resource availability for each virtual machine of the one or more virtual machines comprises processor resource availability for the virtual machine or memory resource availability for the virtual machine.

5. The method of any one of the claims 1 to 4, wherein
the physical resources comprise networking resources or storage resources.

6. The method of any one of the claims 1 to 5, further comprising:
identifying a second host to be added to the computing environment;
identifying second physical resources available on the second host;
determining that the second host requires a new host cluster different from the plurality of host clusters based on the second physical resources available on the second host;
creating the new host cluster; and
assigning the second host to the new host cluster.

7. The method of claim 6, further comprising:
identifying resource requirements associated with a plurality of virtual machines on hosts in the plurality of host clusters;
selecting one or more virtual machines from the plurality of virtual machines to be migrated to the new host cluster based on the resource requirements associated with the plurality of virtual machines; and
migrating the one or more virtual machines to the new host cluster.

8. The method of any one of the claims 1 to 7, further comprising:
identifying a virtual machine to be added to the computing environment;
identifying resource requirements associated with the virtual machine;
selecting a destination cluster for the virtual machine from the plurality of host clusters based on the resource requirements associated with the virtual machine.

9. A computing apparatus comprising:
a storage system;
at least one processor operatively coupled to the storage system; and
program instructions stored on the storage system that, when executed by the storage system,
direct the computing apparatus to control and/or carry out a method as set forth in any obe of the preceding method claims.

10. A system comprising:
a plurality of hosts in a plurality of clusters, wherein each cluster of the plurality of clusters promotes one or more physical resources over one or more other physical resources;
a management computer configured to:
identify a first host to be added to the plurality of hosts;
identify physical resources available on the first host;
determine whether the first host qualifies for a cluster in the plurality of clusters based on the physical resources available on the first host, wherein each cluster of the plurality of clusters comprises one or more hosts of the plurality of hosts that promote one or more physical resources over one or more other physical resources;
if the first host qualifies for a cluster in the plurality of clusters,
assign the first host to the cluster; and
if the first host does not qualify for a cluster in the plurality of clusters:
creating a cluster different from the plurality of clusters; and
assign the first host to the new cluster.

11. The system of claim 10, wherein
the physical resources comprise memory resources and processing resources.

12. The system of claim 10 or 11, wherein
the physical resources comprise networking resources or storage resources.

13. The system of claim 12 further comprising:
the first host configured to communicate the physical resources to the management computer.
